# EUROPEAN PATENT APPLICATION

(11) **EP 4 604 561 A1**
(43) Date of publication of application: **20.08.2025**
(21) Application number: 23878841.8
(22) Date of filing: 04.09.2023
(51) Int. Cl.: H04N 23/54, H04N 23/55, H04N 23/50, H04N 23/68

(54) **IMAGE STABILIZATION ASSEMBLY, CAMERA MODULE AND ELECTRONIC DEVICE**

(30) Priority: 20.10.2022 CN 202211289263
(71) Applicant: GUANGDONG OPPO MOBILE TELECOMMUNICATIONS CORP., LTD., Dongguan, Guangdong 523860 (CN)
(72) Inventor: XIAO, Qing, Dongguan, Guangdong 523860 (CN)
(74) Representative: Penza, Giancarlo
(86) International application number: PCT/CN2023/116857
(87) International publication number: WO 2024/082846

(57) **Abstract**

An image stabilization assembly, a camera module and an electronic device are provided. The image stabilization assembly includes: a base plate; a bearing plate, which includes a fixed member provided on the base plate and a movable member for bearing an image sensor; an elastic member, which is arranged between the fixed member and the movable member; an elevating bracket , which is arranged between the base plate and the movable member; and a driving mechanism, which includes a moving member connected with the movable member, and a deformable member connected between the fixed member and the moving member, where when the deformable member is energized, the deformable member may be deformed to drive the moving member, the movable member and the image sensor to move.

## Description

### CROSS-REFERENCE OF RELATED APPLICATION

This application claims priority to Chinese Patent Application No. 202211289263.X, filed October 20, 2022 and titled "IMAGE STABILIZATION ASSEMBLY, CAMERA MODULE, AND ELECTRONIC DEVICE", the entire disclosures of which are incorporated herein by reference.

### TECHNICAL FIELD

The disclosure relates to a technical field of electronic technologies, and particularly to an image stabilization (anti-shake) assembly, a camera module, and an electronic device.

### BACKGROUND

With the development of portable electronic devices such as smart phones and tablet computers, electronic devices have become an indispensable tool in people's daily lives. People can use the electronic devices to achieve functions such as social contact and entertainment. The shooting function of the electronic devices has become an increasingly in-demand function, and the requirements for shooting quality are getting higher and higher.

### SUMMARY

Embodiments of the disclosure provide an image stabilization assembly, a camera module, and an electronic device, which can improve the image stabilization of the camera module and enhance the quality of captured images.

In a first aspect, the embodiments of the disclosure provide an image stabilization assembly, including:
a base plate;
a bearing plate, including a fixed member and a movable member, where the fixed member and the movable member are spaced apart from each other, the fixed member is installed on the base plate, and the movable member is configured to bear an image sensor of a camera module;
an elastic member, disposed between the fixed member and the movable member;
an elevating bracket, disposed between the base plate and the movable member; and
a driving mechanism, including a moving member and multiple deformable members, where the moving member is connected with the movable member, an end of each of the multiple deformable members is connected with the fixed member, another end of the each of the multiple deformable members is connected with the moving member, and the multiple deformable members are configured to be deformed in an energized state to drive the moving member, the movable member and the image sensor to move.

In a second aspect, the embodiments of the disclosure further provide a camera module, including:
a lens, configured to collect external light;
an image sensor, disposed opposite to the lens in a direction of optical axis of the lens; and
an image stabilization assembly, including:
   a base plate;
   a bearing plate, including a fixed member and a movable member, where the fixed member and the movable member are spaced apart from each other, where the fixed member is installed on the base plate, and the movable member is configured to bear the image sensor;
   an elastic member, disposed between the fixed member and the movable member;
   an elevating bracket, disposed between the base plate and the movable member; and
   a driving mechanism, including a moving member and multiple deformable members, where the moving member is connected with the movable member, an end of each of the multiple deformable members is connected with the fixed member, another end of the each of the multiple deformable members is connected with the moving member, and the multiple deformable members are configured to be deformed in an energized state to drive the moving member, the movable member and the image sensor to move.

In a third aspect, the embodiments of the disclosure further provide an electronic device, including:
a housing; and
a camera module, installed in the housing, and the camera module including:
   a lens, configured to collect external light;
   an image sensor, disposed opposite to the lens in a direction of optical axis of the lens; and
   an image stabilization assembly, including:
      a base plate;
      a bearing plate, including a fixed member and a movable member, where the fixed member and the movable member are disposed spaced apart, the fixed member being installed on the base plate, and the movable member being configured to bear the image sensor;
      an elastic member, disposed between the fixed member and the movable member;
      an elevating bracket, disposed between the base plate and the movable member; and
      a driving mechanism, including a moving member and multiple deformable members, where the moving member is connected with the movable member, an end of each of the multiple deformable members is connected with the fixed member, another end of each of the multiple deformable members is connected with the moving member, and the multiple deformable members are configured to be deformed in an energized state to drive the moving member, the movable member and the image sensor to move.

### BRIEF DESCRIPTION OF THE DRAWINGS

In order to more clearly illustrate technical solutions in the embodiments of the disclosure, drawings to be used in the embodiments are briefly described below. Apparently, the following drawings are merely some embodiments of the disclosure, and those skilled in the art can obtain other drawings according to these drawings without paying any creative effort.

In order to more completely understand the disclosure and its beneficial effects, the following description will be given with reference to the drawings, in which the same reference numerals designate identical elements in the following description.
FIG. 1 is a schematic structural diagram of a camera module according to the embodiments of the disclosure.
FIG. 2 is a schematic explosion structural diagram of the camera module shown in FIG. 1.
FIG. 3 is a schematic explosion structural diagram of an image stabilization assembly shown in FIG. 2.
FIG. 4 is a schematic structural diagram of a partial structure of the image stabilization assembly shown in FIG. 2.
FIG. 5 is a schematic structural diagram of a bearing component and an elastic member of the image stabilization assembly shown in FIG. 3.
FIG. 6 is a schematic enlarged structural diagram of the bearing component and a part of the elastic member shown in FIG. 5.
FIG. 7 is a schematic structural diagram of an elevating bracket of the image stabilization assembly shown in FIG. 3.
FIG. 8 is a schematic structural diagram of a moving member of a driving mechanism shown in FIG. 3.
FIG. 9 is another schematic structural diagram of a partial structure of the driving mechanism shown in FIG. 3.
FIG. 10 is a schematic structural diagram of the camera module shown in FIG. 1 from another angle.
FIG. 11 is a cross-sectional view of the camera module shown in FIG.10 taken along AA direction.
FIG. 12 is another schematic explosion structural diagram of the camera module according to the embodiments of the disclosure.
FIG. 13 is a schematic structural diagram of an electronic device according to the embodiments of the disclosure.

### DETAILED DESCRIPTION OF PREFERRED EMBODIMENTS

The technical schemes in the embodiments of the disclosure will be described clearly and comprehensively with reference to the drawings in the embodiments of the disclosure. Apparently, the following embodiments are merely some embodiments of the disclosure, rather than all the embodiments. Based on the embodiments of the disclosure, all other embodiments obtained by those skilled in the art without creative work fall within the scope of protection of the disclosure.

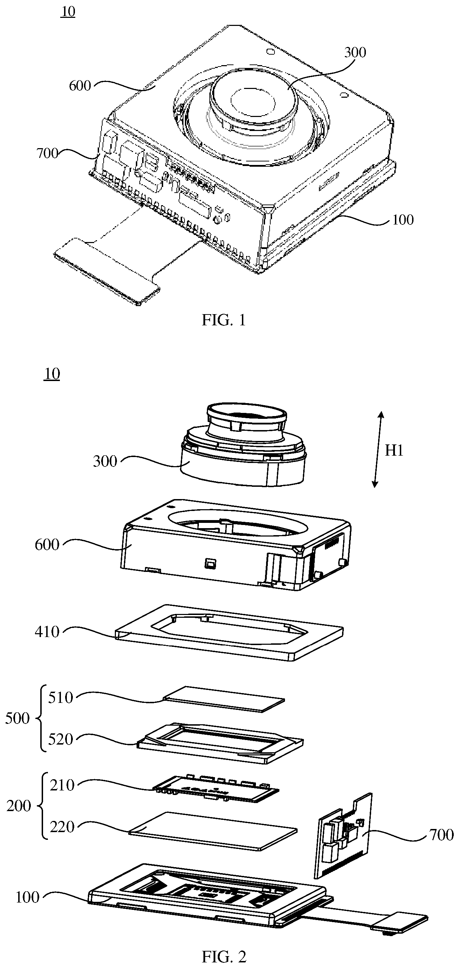

Referring to FIG. 1 and FIG. 2, FIG. 1 is a schematic structural diagram of a camera module according to the embodiments of the disclosure, and FIG. 2 is a schematic explosion structural diagram of the camera module shown in FIG. 1. The embodiments of the disclosure provide a camera module 10 which is configured to realize functions, such as photographing, video recording, face recognition unlocking, and scanning code for payment, of an electronic device. In addition, it is notable that the camera module 10 may be a front camera or a rear camera, and the embodiments are not limited thereto. The structure of the camera module 10 is described in detail below with reference to the accompanying drawings. The camera module 10 at least includes an image stabilization assembly 100, an image sensor assembly 200, and a lens 300.

The lens 300 may be made of a material such as glass or plastic. The lens 300 may be provided with multiple layers of lenses therein. The lens 300 may collect external light, change a propagation path of the light, and focus the light. As shown in FIG. 2, the camera module 10 may further include a filter assembly 500, the filter assembly 500 may be disposed between the lens 300 and the image sensor assembly 200 along a direction of optical axis of the lens 300. The filter assembly 500 may include one or more layers of filters 510 and a filter holder 520, the filter holder 520 bears the filter(s) 510. Each of multiple layers of the filters 510 corrects and filters the light processed by its preceding layer(s), such that the multiple layers of the filters 510 can filter stray light (e.g., infrared light) layer by layer when the light passes through the lens 300, thereby increasing imaging effect of the camera module 10. For example, the filter 510 may be blue glass or other filter structures, and the blue glass may be fixed to the filter holder 520 by glue dispensing and baking or the like.

The image sensor assembly 200 may be disposed opposite to the lens 300 along the direction of optical axis of the lens 300. The image sensor assembly 200 may include an image sensor 210 and an image sensor circuit board 220. The lens 300, the image sensor 210, and the image sensor circuit board 220 may be arranged in a laminated manner along a first direction H1, in which the first direction H1 may be a thickness direction of the camera module 10 or the direction of optical axis of the lens 300. The lens 300 and the image sensor 210 may be arranged in parallel to each other. The image sensor 210 may be, but is not limited to, an image sensor of a type of a charge coupled device (CCD), a complementary metal oxide semiconductor (CMOS), etc. The image sensor 210 is mainly configured to receive the light collected by the lens 300 and convert a light signal into an electrical signal, so as to facilitate imaging requirements of the camera module 10. The image sensor circuit board 220 may bear the image sensor 210, and be electrically connected with the image sensor 210 to provide power and control signals to the image sensor 210. Components such as the image sensor 210 may be installed on the image sensor circuit board 220 through processes such as surface mount technology (SMT), die bonding (D/B), and wire bonding (W/B).

The image stabilization assembly 100 may be disposed on a side of the image sensor 210 away from the lens 300 along the direction of optical axis of the lens 300. The image stabilization assembly 100 may be connected with the image sensor 210 to drive the image sensor 210 to move. The image stabilization assembly 100 may be configured to improve the imaging effect of the camera module 10 that would otherwise be affected by shaking of the camera module 10 during use by the user, so that the imaging effect of the image sensor 210 can meet the user's use requirements. The image stabilization assembly 100 may provide a driving force to drive the image sensor 210 to move.

Based on optical image stabilization technology, a sensor such as a gyroscope or accelerometer, which is in the camera module 10 or in the same electronic device as the camera module 10, may detect the shaking of the lens 300 to generate a shaking signal, and transmit the shaking signal to the electronic device and/or a processing chip of the camera module 10. The electronic device and/or the processing chip of the camera module 10 may calculate a displacement that needs to be compensated by the image stabilization assembly 100, so that the image stabilization assembly 100 can compensate for the lens 300 according to the shaking direction of the lens 300 and the displacement, thereby improving the imaging effect of the camera module 10 that would otherwise be affected by shaking during use by the user.

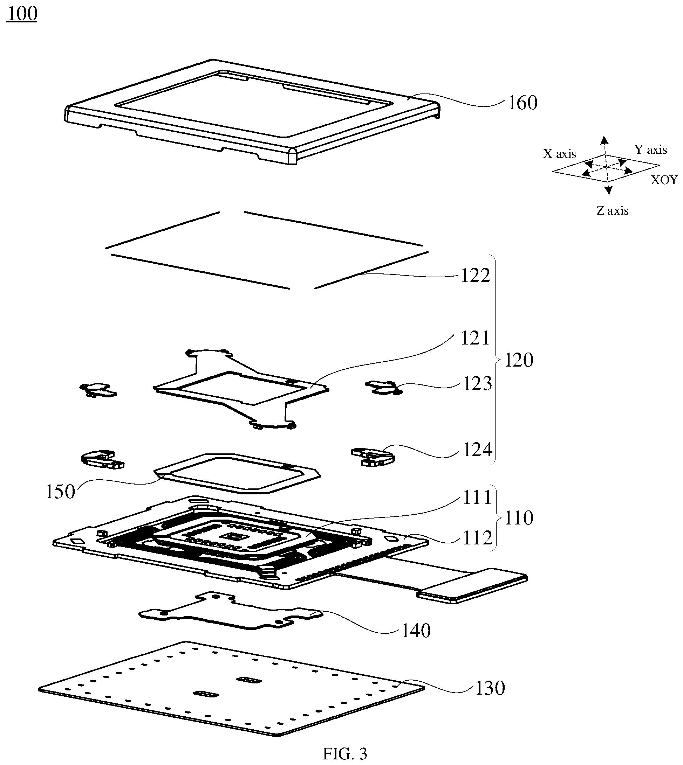

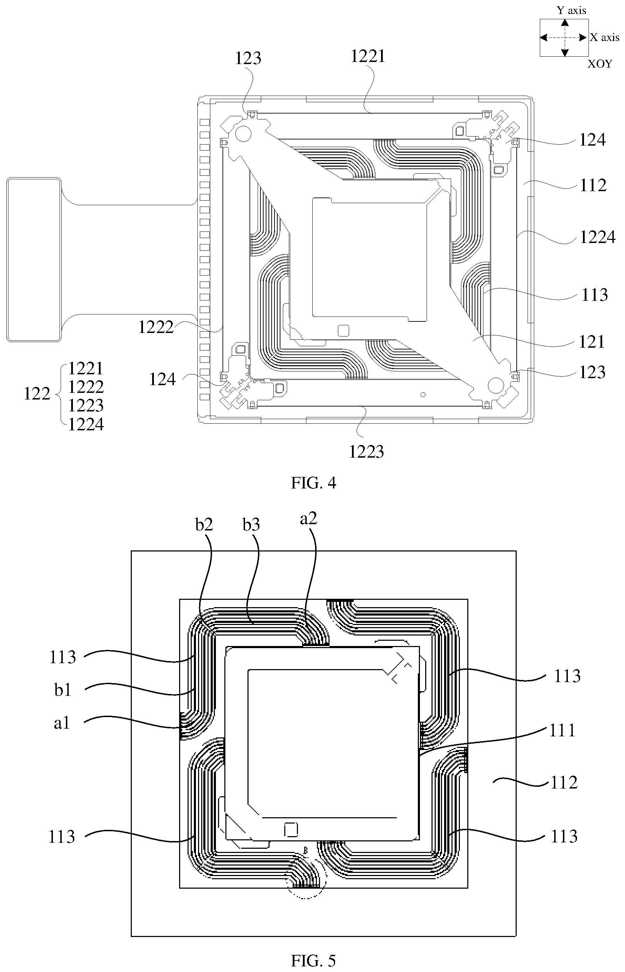

Referring to FIG.2 in conjunction with FIG. 3 and FIG. 4, FIG. 3 is a schematic explosion structural diagram of the image stabilization assembly shown in FIG. 2, and FIG. 4 is a schematic structural diagram of a partial structure of the image stabilization assembly shown in FIG. 2. The image stabilization assembly 100 may include a bearing plate 110, a driving mechanism 120 and a base plate 130.

The base plate 130 may be used as a carrier of the image stabilization assembly 100. The bearing plate 110 and the driving mechanism 120 are directly or indirectly disposed on the base plate 130.

The bearing plate 110 may be used as a circuit board of the image sensor 210 and bear the image sensor 210, that is, the bearing plate 110 is the image sensor circuit board 220. The bearing plate 110 may also be used as a carrier of the circuit board of the image sensor 210, that is, the image sensor circuit board 220 and the image sensor 210 are disposed on the bearing plate. Referring to FIG. 5, FIG. 5 is a schematic structural diagram of a bearing component and an elastic member of the image stabilization assembly shown in FIG. 3. The bearing plate 110 may include a movable member 111 and a fixed member 112, the movable member 111 and the fixed member 112 are spaced apart from each other. The fixed member 112 of the bearing plate 110 may be fixedly connected to the base plate 130. The movable member 111 may bear the image sensor 210 (or the image sensor assembly 200). The image sensor 210 may be directly or indirectly connected with the movable member 111. The fixed member 112 may be sleeved at an outer periphery of the movable member 111. The fixed member 112 and the movable member 111 may define a gap therebetween, such that the movable member 111 can be enabled to move relative to the fixed member 112. The image sensor 210 (or the image sensor assembly 200) may be directly or indirectly connected with the movable member 111 and move synchronously with movement of the movable member 111.

It can be understood that the movable member 111 may be provided with a first electrical connection end, and the first electrical connection end may be electrically connected with the image sensor 210. The fixed member 112 may be provided with a second electrical connection end, and the second electrical connection end may be electrically connected with a driving adapter plate 700 of the camera module 10 or an external circuit outside the camera module 10. When the first electrical connection end and the second electrical connection end are electrically connected through an electrical connector, the image sensor 210 may be electrically connected with the driving adapter plate 700 through the first electrical connection end, the electrical connector, and the second electrical connection end. In this way, the driving adapter plate 700 may lead an electrical signal of the image sensor 210 to the image stabilization assembly 100, so that the driving adapter plate 700 is electrically connected with components, such as a circuit board or a power supply, of the camera module 10 or the electronic device.

It can be understood that, since the fixed member 112 may be connected with the base plate 130 and remain stationary, the driving adapter plate 700 electrically connected with the second electrical connection end of the fixed member 112 does not need to move with the moving member 121 or the movable member 111, and the driving adapter plate 700 does not need to be welded after bending. In this way, the driving adapter plate 700 in the embodiments of the disclosure has a simple welding process and a small size.

The bearing plate 110 may be disposed opposite to the driving mechanism 120 in the direction of optical axis of the lens 300. The driving mechanism 120 may be disposed on a side of the bearing plate 110. For example, as illustrated in FIG.3, the driving mechanism 120 may be disposed on a side of the bearing plate 110 away from the base plate 130, so that the driving mechanism 120 can drive the bearing plate 110 to move in a space above the bearing plate 110. The driving mechanism 120 may also be disposed on a side below the bearing plate 110, for example, on a side below the bearing plate 110 and the image sensor assembly 200, so that the driving mechanism 120 can drive the bearing plate 110 to move in a space below the bearing plate 110 and the image sensor assembly 200. In the embodiments of the disclosure, the arrangement position of the driving mechanism 120 is not limited.

The image stabilization assembly 100 may further include one or more elastic members 113. The one or more elastic members 113 may be disposed between the movable member 111 and the fixed member 112, for example, between an outer periphery of the movable member 111 and an inner periphery of the fixed member 112. A first end a1 of each elastic member 113 may be fixedly connected to the fixed member 112, and a second end a2 of each elastic member 113 may be connected to the movable member 111 and move with the movable member 111. The one or more elastic members 113 may provide the movable member 111 with an elastic force in an opposite direction of the movable member's movement, to tow the movement of the movable member 111. The elastic force provided by the elastic member 113 and the driving force provided by the driving mechanism 120 may act together on the movable member 111, so that the movable member 111 can stably stay at a certain position, thereby achieving precise image stabilization control of the movable member 111 and the image sensor 210.

It can be understood that the elastic member 113 may be made of a material having an elastic restoring force.

For example, as illustrated in FIG. 5, the image stabilization assembly 100 may include four elastic members 113, each of the four elastic members may be a trace suspension assembly (TSA), and the multiple trace suspension assemblies are arranged around the moving member 121. In the related art, the fixed member and the movable member of the bearing plate are connected through a flexible printed circuit (FPC) module. When the image sensor is moved, a reaction force applied by the FPC module is large, and it is difficult to ensure consistency of the FPC module after bending; therefore, the image sensor is prone to tilt when being moved, which further affects the production yield of the camera module. In the embodiments, the fixed member 112 and the movable member 111 are connected through multiple trace suspension assemblies, that is, the elastic member 113 adopts TSA technology in which the trace suspension assembly of the elastic member 113 adopts an exposure etching process to ensure the consistency of the elastic coefficient of the trace suspension assembly. In this way, the consistency of the elastic member 113 is excellent, and the yield of the image stabilization assembly 100 can be improved.

In order to simplify the circuit configuration of the image stabilization assembly 100, the camera module 10 or the electronic device, one or more elastic members 113 may be electrical connectors with conductive properties made from a conductor material. That is, an end of the elastic member 113 is configured to be electrically connected with the image sensor 210, and another end of the elastic member 113 is configured to be electrically connected with the external circuit, whereby the image sensor 210 is electrically connected with the external circuit. For example, the elastic member 113 may be electrically connected with a pad of the image sensor circuit board 220 using thermal-compression welding or the like.

Exemplarily, the movable member 111 may be provided with the first electrical connection end that is directly or indirectly electrically connected with the image sensor 210, the fixed member 112 may be provided with the second electrical connection end that is directly or indirectly electrically connected with an external circuit, and the elastic member 113 may be directly or indirectly electrically connected with each of the second electrical connection end and the first electrical connection end. In this way, the external circuit can be directly or indirectly electrically connected with the image sensor 210 through the second electrical connection end, the elastic member 113, and the first electrical connection end.

It can be understood that the first electrical connection end may be, but is not limited to, a pad structure on the movable member 111, and the second electrical connection end may be, but is not limited to, a pad structure on the fixed member 112. The external circuit may be, but is not limited to, electrically connected with the second electrical connection end via the driving adapter plate 700.

It can be understood that the external circuit may not only provide power for the image sensor 210, but also transmit control signals to the image sensor 210, so that a control chip of the camera module 10 and a control chip of the electronic device 1 can control the image sensor 210.

Regarding the image stabilization assembly 100 in the embodiments of the disclosure, the external circuit may be electrically connected with the image sensor 210 via the elastic member 113. The elastic member 113 may be used as not only an elastic damping member but also an electrical connector, the elastic members 113 is reused, and the image stabilization assembly 100 does not require to additionally provide a flexible circuit board to supply power to the image sensor 210. Therefore, in the embodiments of the disclosure, the elastic member 113 enables simplification of the circuit setting of the image stabilization assembly 100, and miniaturized design of the image stabilization assembly 100.

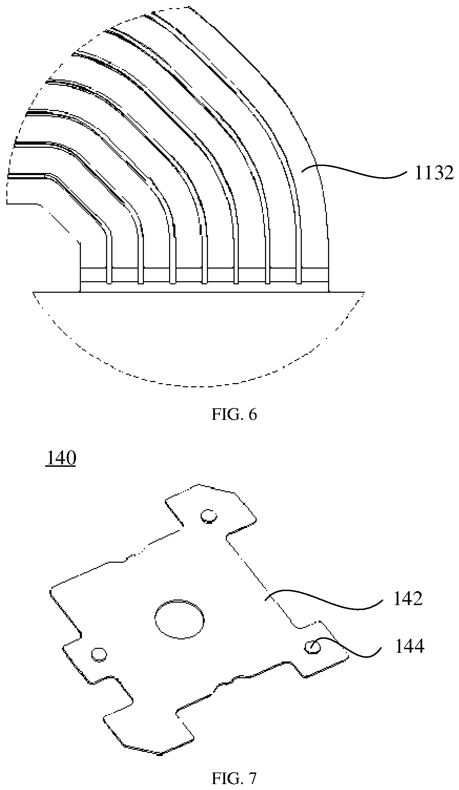

Referring to FIG. 6, FIG. 6 is a schematic enlarged structural diagram of the bearing component and a part of the elastic member shown in FIG. 5. Each trace suspension assembly may include multiple suspension traces 1132, and the multiple suspension traces 1132 are disposed side by side. The multiple suspension traces 1132 can not only physically connect the fixed member 112 with the movable member 111, but also electrically connect the circuits on the fixed member 112 and the movable member 111. The multiple suspension traces 1132 in each trace suspension assembly may be spaced apart from one another, that is, two adjacent suspension traces 1132 are spaced apart to achieve circuit isolation without affecting power or signal transmission of the multiple suspension traces 1132.

In some implementations, the elastic member 113 may also include but is not limited to various springs. Each elastic member 113 may include one or more sub-elastic members, and each elastic member 113 may be formed by spiraling multiple elastic filaments, in which the first end a1 of the elastic member 113 may be an end formed by the multiple elastic filaments together, and the second end a2 of the elastic member 113 may be the other end formed by the multiple elastic filaments together. In actual production, each elastic member 113 may also be formed by only one spring. In the embodiments of the disclosure, the specific structure of the elastic member 113 is not limited. Any structure of the elastic member 113, that can withstand the force generated by the movement of the movable member 111 driven by the driving mechanism 120 and has an elastic restoring force, falls within the protection scope of the embodiments of the disclosure.

In some embodiments, a projection of the first end a1 of each elastic member 113 on the movable member 111 may be arranged to be not overlapped with the second end a2 of such elastic member 113. For example, the first end a1 and the second end a2 are respectively arranged at different sides of the movable member 111. Each elastic member 113 is connected with a side of the fixed member 112 and a side of the movable member 111 corresponding to the side of the fixed member 112. Each elastic member 113 may has a torsion spring structure, and multiple elastic members 113 generate a large towing force on the movable member 111, thereby improving the stability of the movable member 111.

It can be understood that, as shown in FIG. 5, each elastic member 113 may include a first elastic portion b1, a first corner portion b2, and a second elastic portion b3 which are connected in sequence. The first elastic portion b1 may be connected with the fixed member 112, and the second elastic portion b3 may be connected with the movable member 111. A first connecting line between the first elastic portion b1 and the first corner portion b2 and a second connecting line between the first corner portion b2 and the second elastic portion b3 may be at a preset included angle, which may be but not limited to 90 degrees. According to the embodiments of the disclosure, each elastic member 113 includes the three portions mentioned above. Each elastic member 113 may has a torsion spring structure with a large torsion amplitude. Each elastic member 113 applies a large towing force to the movable member 111, such that the elastic members 113 can further ensure the stability of the movable member 111.

In order to further improve the stability of the movable member 111, the multiple elastic members 113 on the bearing plate 110 may be arranged around the outer periphery of the movable member 111 in sequence. For example, as shown in FIG. 5, the multiple elastic members 113 may be arranged clockwise around the outer periphery of the movable member 111, in which case the elastic members 113 may be arranged clockwise in an order of the first end, the second end, the first end, the second end, and so on. In some implementations, the multiple elastic members may also be arranged counterclockwise around the outer periphery of the movable member 111, in which case the elastic members 113 may be arranged counterclockwise in an order of the first end, the second end, the first end, the second end, and so on.

For two adjacent elastic members 113, projection of the second end a2 of one of the elastic members 113 (e.g., the elastic member 113 located at the front) on the movable member 111 and projection of the first end a1 of another elastic member 113 (e.g., the elastic member 113 located at the rear) on the movable member 111 may be adjacent to each other and located on a same side of the movable member 111. It is understood that the term "adjacent" here may means that a distance between the first end a1 of the elastic member 113 located at the front and the second end a2 of the elastic member 113 located at the rear may be within a small preset range, so that the elastic torsion force applied by the two adjacent elastic members 113 may cover the entire side of the movable member 111, and the stability of the movable member 111 can be thus better.

When the fixed member 112 is in a rectangular frame structure and the movable member 111 is in a rectangular plate structure, the bearing plate 110 may include four elastic members 113 accordingly, so that each elastic member 113 is connected with a side of the fixed member 112 and an adjacent side of the movable member 111 that is adjacent to a side of the movable member 111 corresponding to such side of the fixed member 112. Each elastic member 113 may include a trace suspension assembly. On the one hand, the trace suspension assembly can provide a tugging force to the movement of the movable member 111 and improve the stability of the movable member 111; and on the other hand, the trace suspension assembly can also prevent separation of the movable member 111 from the elastic member 113 that would be caused due to the movement of an excessive amplitude of the movable member 111.

It is notable that the embodiment above only exemplarily illustrates a connection manner of the elastic members 113, the movable member 111 and the fixed member 112. The specific connection manner of the elastic member 113 is not limited to the above description. For example, the elastic member 113 may alternatively be directly connected with a side of the fixed member 112 and a corresponding side of the movable member 111. In the embodiments in the disclosure, the specific connection manner of the elastic member 113 is not limited.

It is notable that the specific structure of the image stabilization assembly 100 in the embodiments of the disclosure is not limited to the description of the above embodiments. For example, the image stabilization assembly 100 may be provided with elastic structures on the upper and lower sides of the bearing plate 110 to further improve the stability of the image sensor 210. For another example, the image stabilization assembly 100 may adopt other driving manners to enable the image sensor 210 to move in other directions. In the embodiments in the disclosure, the specific structure of the image stabilization assembly 100 is not limited.

It is understandable that the image sensor 210, the movable member 111 and the moving member 121 may be suspended on the base plate 130. When the driving mechanism 120 drives the movable member 111 to move, the movable member 111 is prone to tilt during the movement, which affects the quality of a captured image.

In some embodiments, as shown in FIG.3, the image stabilization assembly 100 may further include an elevating bracket 140, the elevating bracket 140 is disposed between the base plate 130 and the movable member 111 and may be configured to raise the movable member 111. The elastic member(s) 113 may generate an elastic restoring force so as to make the movable member 111 abut against the elevating bracket 140. The elevating bracket 140 is connected with the base plate 130. The moving member 121, the movable member 111 and the image sensor 210 may remain relatively stationary during the movement, thereby preventing the image sensor 210 from tilting during the movement. In this way, the anti-shake effect is improved and the quality of the captured image is enhanced.

Referring to FIG. 7, FIG. 7 is a schematic structural diagram of the elevating bracket of the image stabilization assembly shown in FIG. 3. The elevating bracket 140 may include an elevating baseplate 142 and at least three protrusions 144, the protrusions 144 are arranged spaced apart from one another, and all of the protrusions 144 are arranged on a side of the elevating baseplate 142 facing the movable member 111. Surfaces of all the protrusions 144 facing the movable member 111 are in a same plane, and at least three of the protrusions 144 abut against the movable member 111. The surfaces of the at least three protrusions 144 may determine a plane, so that the movable member 111 arranged on the at least three protrusions 144 is on one plane, ensuring the stability of the movable member 111. In addition, the movable member 111 is arranged on the elevating bracket 140 via the multiple protrusions 144. When the movable member 111 is moved relative to the elevating bracket 140, the movable member 111 does not need to move relative to the entire elevating baseplate 142, but only needs to move relative to the multiple protrusions 144, thereby reducing the influence of the elevating bracket 140 on the movement of the movable member 111. The surface of each protrusion 144 may be smooth, and the surface of the movable member 111 in contact with the multiple protrusions 144 may also be smooth, so that the movable member 111 can move relative to the multiple protrusions 144 easily.

The elevating bracket 140 may be formed by an etching process, as such, the elevating bracket 140 can have good flatness. For example, the surface of each protrusion 144 of the elevating bracket 140 that abuts against the movable member 111 may be formed by the etching process, so that the surface of each protrusion 144 has good flatness and smoothness. For another example, the elevating baseplate 142 is not provided with the protrusion 144, and the elevating baseplate 142 directly abuts against the movable member 111. The surface of the elevating baseplate 142 abutting against the movable member 111 may be formed by the etching process, so that the surface of the elevating baseplate 142 has good flatness and smoothness.

The multiple protrusions 144 may be disposed at different regions of the elevating baseplate 142. For example, the multiple protrusions 144 may be disposed at different edges of the elevating baseplate 142; alternatively, the multiple protrusions 144 may be disposed at different positions in the middle of the elevating baseplate 142.

In some implementations, a superlubricity structure may be provided between the elevating bracket 140 and the movable member 111, and the friction coefficient of the superlubricity structure may be 10-3. The elevating bracket 140 and the movable member 111 are connected in a sliding way via the superlubricity structure, which can improve the sliding effect between the elevating bracket 140 and the movable member 111, lower the power consumption of the driving mechanism 120, and reduce the requirements of the driving structure 120. The superlubricity structure may be installed on the elevating bracket 140 or the movable member 111. When the superlubricity structure is provided between the elevating bracket 140 and the movable member 111, the smoothness requirement of the surface of the movable member 111 facing the elevating bracket 140 can be reduced. For example, the surface of the movable member 111 facing the elevating bracket 140 can be free of coating, and the smoothness requirement of the surface of the elevating bracket 140 facing the movable member can be reduced. In some examples, multiple protrusions 144 are provided on the side of the elevating bracket 140 facing the movable member 111, and the surfaces of at least three protrusions 144 facing the movable member 111 are provided with the superlubricity structure. As such, the protrusions 144 can be formed without the etching process, so that the difficulty of forming the protrusions 144 is decreased, the cost is reduced, and the sliding effect of the protrusions 144 and the movable member 111 is better.

It is notable that, to better set the moving member 121, considering that the elevating bracket 140 raises the movable member 111, the height of the fixed member 112 remains unchanged, and the movable member 111 and the fixed member 112 are connected via the elastic member 113, the moving member 121 may be installed on the side of the movable member 111 away from the base plate 130, so that the setting of the fixed member 112 and the movable member 111 cannot be affected.

In some implementations, the movable member 111 includes a metal layer and an insulating layer which are disposed in a laminated manner, a side of the insulating layer facing away from the base plate is configured to bear the image sensor of the camera module, and the metal layer is disposed on a side of the insulating layer facing the base plate. A bottom surface of the movable member 111 may be provided with the metal layer such as a layer of titanium copper, so that the movable member 111 has good elasticity. The insulating layer is disposed on the metal layer, so as to facilitate the setting of the image sensor on the insulating layer.

Referring to FIG. 3 and FIG. 4, the driving mechanism 120 may include the moving member 121 and multiple deformable members 122. The moving member 121 may be directly or indirectly connected with the movable member 111, so that the moving member 121, the movable member 111 and the image sensor 210 (or the image sensor assembly 200) disposed on the movable member 111 may form a whole. An end of each deformable member 122 may be directly or indirectly connected with the fixed member 112, and another end of each deformable member 122 may be directly or indirectly connected with the moving member 121. The multiple deformable members 122 may be deformed in an energized state to drive the whole of the moving member 121, the movable member 111 and the image sensor 210 to move, so that the moving member 121, the movable member 111 and the image sensor 210 can move synchronously. For example, multiple deformable members 122 may be deformed in the energized state to drive the moving member 121, the movable member 111, and the image sensor 210 to move in a direction perpendicular to the optical axis of the lens 300 or rotate around the direction of optical axis of the lens 300. The image sensor 210 may be rotated around an X-axis or a Y-axis, or in an XOY plane under the action of the image stabilization assembly 100.

It can be understood that, the direction of the optical axis of the lens 300 may be the first direction H1, in which the first direction H1 may be a vertical direction, such as a direction along a coordinate axis Z-axis. The direction perpendicular to the optical axis of the lens 300 may be a second direction, in which the second direction may be any horizontal direction in a horizontal plane, such as a direction along the coordinate axis X-axis or Y-axis. A direction around the optical axis of the lens 300 may be any direction in a plane perpendicular to the optical axis of the lens 300, such as any direction in the XOY plane of the coordinate axis.

It can be understood that, the deformable members 122 are made of a shape memory alloy (SMA). The shape memory alloy may be heated in the energized state and thus be deformed, and the deformation of the shape memory alloy may cause the length of the multiple deformable members 122 to be changed. When the multiple deformable members 122 are energized or applied with electric currents of different magnitudes, the lengths of the deformable members 122 may be changed. Since one end of each deformable member 122 is fixed with the fixed member 112 of the bearing plate 110, and the another end of each deformable member 122 is moved with the moving member 121, the deformable members 122 with changed lengths may drive the moving member 121 to move, and the moving member 121 may drive movement of the movable member 111 and the image sensor 210 that are directly or indirectly connected with the moving member 121.

In the image stabilization assembly 100 according to the embodiments of the disclosure, the driving mechanism 120 includes the moving member 121 and the multiple deformable members 122. The moving member 121 is connected with the movable member 111 of the bearing plate 110, one end of each of the deformable members 122 is connected with the moving member 121, and the another end of each of the deformable members 122 is connected with the fixed member 112 of the bearing plate 110. In this way, when the multiple deformable members 122 are deformed, the multiple deformable members 122 can drive the moving member 121 to move, and the moving member 121 can drive the movable member 111 and the image sensor 210 arranged on the movable member 111 to move, and thus the image stabilization assembly 100 enables the image stabilization functions of the image sensor 210. Two ends of each deformable member 122 are respectively connected with the fixed member 112 and the moving member 121, there is no need for the deformable member 122 to occupy a space of the movable member 111, and the deformable member 122 would not affect the distribution of the circuit on the movable member 111, thereby reducing the influence of the deformable members 122 on the circuit of the movable member 111. In addition, the moving member 121 and the bearing plate 110 are independent of each other. The moving member 121 and the bearing plate 110 may be separately modularized in the production assembly process, so as to improve the adaptability of the moving member 121 and the bearing plate 110. It is notable that the moving member 121 and the bearing plate 110 may be produced together by the same production process. In the embodiments of the present disclosure, the production process of the moving member 121 and the bearing plate 110 are not limited.

The driving mechanism 120 may further include multiple movable ends 123 and multiple fixed ends 124. The multiple movable ends 123 may be provided on the moving member 121, and the multiple fixed ends 124 may be provided on the fixed member 112. An end of each deformable member 122 may be directly or indirectly connected with one of the movable ends 123, and another end of the deformable member 122 may be directly or indirectly connected with one of the fixed ends 124. When the length of the deformable member 122 is changed in the energized state, the movable end 123 connected with the deformable member 122 may be moved with the moving member 121 as the length of the deformable member 122 is changed, and the fixed end 124 connected with the deformable member 122 is fixed with the fixed member 112 without moving.

It can be understood that, one or more movable ends 123 may be spaced apart from each other, and connected with the moving member 121. Alternatively, two or more of the multiple movable ends 123 may be adjacent (or connected to each other) rather than being spaced apart. In a similar manner, one or more fixed ends 124 may be spaced apart from each other, and connected with the fixed member 112 (e.g., spaced apart from each other and located on a front surface of the fixed member 112). Alternatively, two or more of the multiple fixed ends 124 may be adjacent (or connected to each other) rather than being spaced apart. The embodiments of the disclosure do not impose any specific limitations on the arrangement of the multiple movable ends 123 and the multiple fixed ends 124.

Exemplarily, as illustrated in FIG. 4, the driving mechanism 120 may include two movable ends 123 spaced apart from each other and two fixed ends 124 spaced apart from each other. For example, the two movable ends 123 and the two fixed ends 124 may define a quadrilateral structure, the two movable ends 123 may be located on one diagonal line of the quadrilateral structure, the two fixed ends 124 may be located on the other diagonal line of the quadrilateral structure, and the two movable ends 123 and the two fixed ends 124 may define four vertices of the quadrilateral structure. The image stabilization assembly 100 may further be provided with four deformable members 122 accordingly, and the four deformable members 122 may be arranged at the four sides of the quadrilateral structure. Based on the characteristic that the quadrilateral structure is easy to deform, when the deformable member 122 is deformed, the deformable member 122 is easily affected by the movable ends 123 and the fixed ends 124 located at the vertices, so that the quadrilateral structure is changed and thus more easily moves the movable member 111 and the image sensor 210 arranged on the movable member 111.

It can be understood that one or more movable ends 123 may be integrally formed on the moving member 121, and one or more fixed ends 124 may also be integrally formed on the fixed member 112. Compared with the solution in which the deformable member 122 is directly connected to the fixed member 112, in the embodiments of the disclosure, the deformable member 122 is connected with the movable end 123 or the fixed end 124 through winding, clamping, welding, etc., as such, the fixed member 112 and the circuit wiring on the fixed member 112 are resistant to damage in the process of connecting the deformable member 122 with the movable end 123 or the fixed end 124.

It can be understood that both the number of the movable ends 123 and the number of the fixed ends 124 may be equal to half the number of the deformable members 122, so that one movable end 123 may be connected with the ends of two deformable members 122, and one fixed end 124 may also be connected with the ends of two deformable members 122. In this way, the driving mechanism 120 according to the embodiments of the disclosure may be provided with relatively less quantity of the movable ends 123 and fixed ends 124.

It can be understood that the image stabilization assembly 100, the camera module 10 or the electronic device may further include a driving control chip, the driving control chip may be arranged on the fixed member 112 of the bearing plate 110 and serve as a driving circuit that causes the deformation of the deformable members 122. Alternatively, the fixed member 112 may be provided with a separate driving circuit, and the driving control chip may be electrically connected with the driving circuit on the fixed member 112 via the above-mentioned driving adapter plate 700. At least one of the multiple movable ends 123 and the multiple fixed ends 124 may be a conductive device, so that the driving circuit can be electrically connected with the deformable member 122 via the multiple movable ends 123, or the multiple fixed ends 124, or both of the multiple movable ends 123 and the multiple fixed ends 124, so that the driving control chip can supply a driving current to the deformable members 122.

It can be understood that the movable ends 123 and the fixed ends 124 may have a certain height so that the movable ends 123 and the fixed ends 124 may separate the bearing plate 110 from the moving member 121 and the deformable members 122. In this way, when the multiple deformable members 122 are deformed, the multiple deformable members 122 are not easily in contact with the bearing plate 110, which can prevent the bearing plate 110 from interfering with the deformation of the deformable members 122. In addition, the circuit on the bearing plate 110 can also be prevented from being shorted out that would be caused when being in contact with the deformable members 122.

In some implementations, the driving mechanism 120 may further include an elevating member 150, which is disposed between the moving member 121 and the movable member 111. The elevating member 150 may raise up the moving member 121, so that the movable ends 123 connected with the moving member 121 are raised up accordingly, and the moving member 121 is spaced apart from the fixed member 112.

The image stabilization assembly 100 may be provided with the multiple movable ends 123 and the multiple fixed ends 124. The deformable members 122 are connected with the fixed member 112 of the bearing plate 110 through the fixed ends 124 and connected with the moving member 121 of the driving mechanism 120 through the movable ends 123; as such, the connection process of the deformable member 122 is simple and would not affect the circuit routing on the fixed member 112. In addition, the movable ends 123 and the fixed ends 124 may be used as conductive devices to supply power to the deformable members 122, which can simplify the layout of the power supply circuit for the deformable member 122, thereby enabling the miniaturized design of the image stabilization assembly 100.

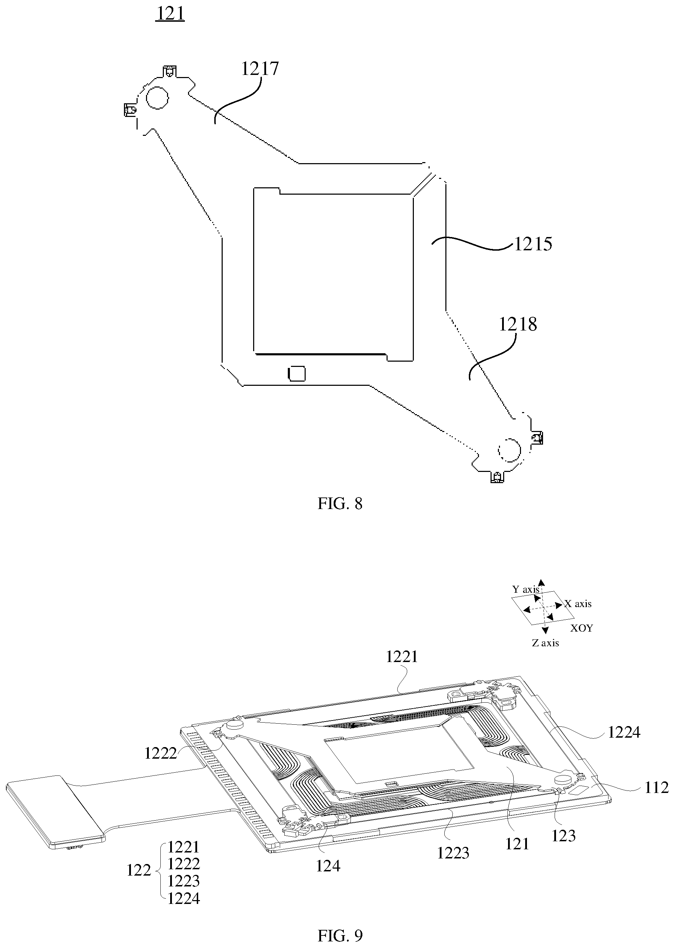

The deformable members 122 may be arranged around the moving member 121, such that the deformable members 122 can better control the movement of the moving member 121. Exemplarily, referring to FIG. 8, FIG. 8 is a schematic structural diagram of the moving member of the driving mechanism shown in FIG. 3. The moving member 121 may include a middle portion 1215, a first extension portion 1217 and a second extension portion 1218. The middle portion 1215 may be in substantially a rectangular frame structure. The first extension portion 1217 and the second extension portion 1218 are arranged at two opposite corners of the middle portion 1215. The middle portion 1215 is located above the movable member 111, the first extension portion 1217 extends from one corner of the middle portion 1215 to being above the fixed members 112, and the second extension portion 1218 extends from another corner of the middle portion 1215 to being above the fixed members 112. The first extension portion 1217 and the second extension portion 1218 may extend in a direction away from each other, and each of the first extension portion 1217 and the second extension portion 1218 is provided with a respective movable end 123 thereon.

The fixed member 112 may be a rectangular frame structure, and the movable member 111 may be located in a hollow area of the fixed member 112. When the driving mechanism 120 includes two movable ends 123 and two fixed ends 124, the two movable ends 123 may be disposed at the first extension portion 1217 and the second extension portion 1218 of the moving member 121 respectively, the two fixed ends 124 may be disposed at two opposite ends of the fixed member 112 respectively, each movable end 123 may be disposed between the two fixed ends 124, and each fixed end 124 may be disposed between the two movable ends 123. Thus, the two movable ends 123 may be located on one diagonal line of the moving member 121, and the two fixed ends 124 may be located on the other diagonal line of the moving member 121.

The image stabilization assembly 100 includes four deformable members 122 located on four sides of the fixed member 112 respectively. Specifically, each deformable member 122 is arranged with respect to one side of the fixed member 112, an end of each deformable member 122 is connected to one movable end 123, and the other end of each deformable member 122 is connected to one fixed end 124. It can be understood that the four deformable members 122 cooperate with each other to enable the moving member 121 to move, for example, they drive the moving member 121 to move in the direction perpendicular to the optical axis of the lens 300 or rotate around the optical axis of the lens 300.

In order to facilitate understanding the control over the movement of the image sensor 210 through the deformable members 122 in the embodiments, an example is given below. Referring to FIG.9, FIG. 9 is another schematic structural diagram of a partial structure of the driving mechanism shown in FIG. 3. The four deformable members 122 may include a first deformable member 1221, a second deformable member 1222, a third deformable member 1223 and a fourth deformable member 1224.

When the first deformable member 1221 is energized to be shortened, and/or the third deformable member 1223 is energized to be lengthened, the first deformable member 1221 and the third deformable member 1223 may drive the moving member 121, the movable member 111 and the image sensor 210 to translate to the right along the X-axis direction. When the first deformable member 1221 is energized to be lengthened, and/or the third deformable member 1223 is energized to be shortened, the first deformable member 1221 and the third deformable member 1223 may drive the moving member 121, the movable member 111 and the image sensor 210 to translate to the left along the X-axis direction.

When the second deformable member 1222 is energized to be shortened, and/or the fourth deformable member 1224 is energized to be lengthened, the second deformable member 1222 and the fourth deformable member 1224 may drive the moving member 121, the movable member 111 and the image sensor 210 to translate downward along the Y-axis direction. When the second deformable member 1222 is energized to be lengthened, and/or the fourth deformable member 1224 is energized to be shortened, the second deformable member 1222 and the fourth deformable member 1224 may drive the moving member 121, the movable member 111 and the image sensor 210 to translate upward along the Y-axis direction.

When the first deformable member 1221 and the third deformable member 1223 are energized at the same time to be shortened, the first deformable member 1221 and the third deformable member 1223 may drive the moving member 121, the movable member 111 and the image sensor 210 to rotate clockwise along the diagonal of the moving member 121 in the XOY plane. When the first deformable member 1221 and the third deformable member 1223 are energized at the same time to be lengthened, the first deformable member 1221 may drive the moving member 121, the movable member 111 and the image sensor 210 to rotate counterclockwise along the diagonal of the moving member 121 in the XOY plane.

When the second deformable member 1222 and the fourth deformable member 1224 are energized at the same time to be shortened, the second deformable member 1222 and the fourth deformable member 1224 may drive the moving member 121, the movable member 111 and the image sensor 210 to rotate counterclockwise along the diagonal of the moving member 121 in the XOY plane. When the second deformable member 1222 and the fourth deformable member 1224 are energized at the same time to be lengthened, the second deformable member 1222 and the fourth deformable member 1224 may drive the moving member 121, the movable member 111 and the image sensor 210 to rotate clockwise along the diagonal of the moving member 121 in the XOY plane.

In the image stabilization assembly 100 according to the embodiment of the disclosure, the first deformable member 1221, the second deformable member 1222, the third deformable member 1223, and the fourth deformable member 1224 are arranged around the moving member 121. The multiple deformable members 122 may symmetrically and evenly control the movement of the moving member 121, the movement distance and movement direction of the moving member 121 are more controllable, which facilitates the image stabilization assembly 100 to calculate image stabilization parameters of the image sensor 210. In addition, the multiple deformable members 122 can drive the moving member 121 and the image sensor 210 to move, so as to achieve image stabilization for translation along the X-axis and Y-axis, and image stabilization for rotation in the XOY plane. In this way, the image stabilization assembly 100 can adapt to the image stabilization compensation in various shaking scenes, and the camera module 10 can realize the image stabilization compensation in the various shaking scenes, so that the camera module 10 has good adaptability.

It is notable that, the deformable members 122 according to the embodiments of the disclosure can drive the moving member 121, the movable member 111, and the image sensor 210 to move in other ways besides driving them to move along the direction perpendicular to the optical axis of the lens 300 or rotate around the optical axis of the lens 300. For example, the deformable members 122 may drive the moving member 121, the movable member 111, and the image sensor 210 to move upward and downward along the direction of optical axis of the lens 300. Alternatively, the deformable members 122 may drive the moving member 121, the movable member 111, the image sensor 210 to flip around the direction perpendicular to the optical axis of the lens 300, and the arrangements of the deformable members 122 and the moving member 121 may be changed accordingly. For example, the image stabilization assembly 100 and the image sensor assembly 200 are generally arranged along the optical axis of the lens, a reflector is provided between the image stabilization assembly 100 and the lens 300, and the reflector can deflect the light entering from the lens 300 by 90 degrees and then let the light pass into the sensor assembly 200. In the embodiments of the present disclosure, the specific manner at which the deformable members 122 drive the moving member 121, the movable member 111, and the image sensor 210 to move, is not limited.

It is understandable that the size of the frame structure of the moving member 121 may be adapted to the size of the movable member 111 of the bearing plate 110, so as to enable the moving member 121 to bear the movable member 111. The projections of the first extension portion 1217 and the second extension portion 1218 of the moving member 121 on the bearing plate 110 may be located on the fixed member 112 of the bearing plate 110, so that the size of the quadrilateral structure defined by the two movable ends 123 and the two fixed ends 124 can be adapted to the size of the fixed member 112. As such, the length of the multiple deformable members 122 can be long, and the multiple deformable members 122 drive the moving member 121, the movable member 111 and the image sensor 210 to move at a long movement journey.

The moving member 121 according to the embodiments of the disclosure is provided with the first extension member 1217 and the second extension member 1218. On the one hand, the first extension member 1217 and the second extension member 1218 can support the two movable ends 123; on the other hand, the first extension member 1217 and the second extension member 1218 enable the deformable members 122 to have a long length, and enables the deformable members 122 to drive the moving member 121, the movable member 111 and the image sensor 210 to move at a long movement journey, so that the image stabilization assembly 100 can provide more image stabilization compensation for the image sensor 210.

It is understandable that the image stabilization assembly may further includes an image stabilization housing 160, the image stabilization housing may be provided on the fixed member 112 and cover the driving mechanism 120 and the movable member 111 to protect the driving mechanism 120 and the movable member 111. The image sensor assembly 200 and the filter assembly 500 may also be disposed in the image stabilization housing 160. The image stabilization housing 160 is provided with an opening in the middle, and the opening directly faces the lens 300, so that the light collected by the lens 300 can travel to the filter 510 and the image sensor 210 through the opening.

The driving adapter plate 700 of the camera module 10 may be electrically connected with the deformable members 122 to control the deformation of the deformable members 122, thereby realizing the image stabilization of the camera module 10. The driving adapter plate 700 may be arranged vertically, such as being perpendicular to or approximately perpendicular to the base plate 130. By arranging the driving adapter plate 700 vertically on the base plate 130, the size of the camera module can be reduced. A separate driving adapter plate 700 is designed, with the driver IC and some other electronic components being provided on the driving adapter plate 700, which is conducive to the stacking of the camera module. In addition, considering that when the camera module is arranged on the main board of the electronic device, the main board is required to provide an accommodating hole for the camera module, and the camera module is disposed in the accommodating hole of the main board, the smaller the size of the camera module, the smaller the area of the accommodating hole provided on the main board, and the larger an area of the main board where circuits are allowed to be layout, which is convenient for the main board to layout the circuits reasonably.

In some implementations, the driving adapter plate 700 may be attached to the image stabilization housing 160, that is, a side of the driving adapter plate is attached to the image stabilization housing 160. In this way, the image stabilization housing 160 can support the driving adapter plate 700 and the structure of the driving adapter plate 700 and the image stabilization housing 160 can be more compact. It is notable that the fixed member 112 may be provided with multiple welding pins, and the driving adapter plate 700 is correspondingly provided with multiple welding pins. The welding pins of the fixed member 112 and the welding pins of the driving adapter plate 700 are connected by welding, so that the fixed member 112 and the driving adapter plate 700 are electrically connected with each other.

In some implementations, the camera module 10 may further include a module housing, the lens 300 is installed in the module housing, and the driving adapter plate 700 may be attached to the module housing, so that the module housing can support the driving adapter plate 700, and the structure of the driving adapter plate 700 and the module housing can be more compact. Exemplarily, the module housing may be stacked on the image stabilization housing 160, the driving adapter plate 700 is arranged on the same side of the module housing and the image stabilization housing 160, and the sides of the module housing and the image stabilization housing 160 facing the driving adapter plate 700 may be flush, so that the driving adapter plate 700 can be attached to both of the module housing and the image stabilization housing 160. Alternatively, the sides of the module housing and the image stabilization housing 160 facing the driving adapter plate 700 may not be flush, one of the module housing and the image stabilization housing 160 protrudes toward the driving adapter plate 700, and the driving adapter plate 700 may be attached to a protruding one of the module housing and the image stabilization housing 160. In some other examples, the module housing may cover the image stabilization housing 160, that is, the image stabilization housing 160 is arranged in the module housing, and the driving adapter plate 700 is accordingly attached to the module housing.

In some implementations, the driving adapter plate 700 may include a detection unit and a control chip, the detection unit is electrically connected with the deformable members 122 and is configured to obtain resistance values of the deformable members 122. The control chip is electrically connected with the detection unit, and is configured to control a current passing through the deformable members 122 according to the resistance values. Using the characteristic that the deformable member 122 (SMA metal wire) can shrink when being heated and expand when being cooled, the detection unit obtains the resistance values of the deformable members 122, and the control chip can obtain the lengths of the deformable members 122 according to the resistance values obtained by the detection unit, and then obtain the position of the image sensor; thereafter, the control chip may control the current of the deformable members 122 to change the lengths of the deformable members 122, so as to change the position of the image sensor to achieve image stabilization of the image sensor. The control is performed by using the feedback of the resistance values of the deformable members 122 without requiring a hall sensor, which is lower in cost and simpler in structure. Compared with the image stabilization assembly 100 of the same volume, a longer deformation member 122 can be assembled, so that the image stabilization assembly 100 can provide a longer movement journey and provide a larger image stabilization angle.

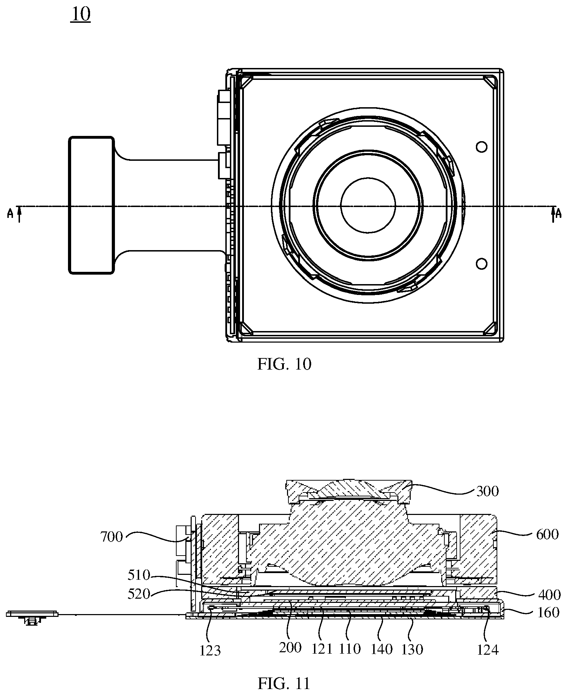

Referring to FIG. 10 and FIG. 11 in combination with FIG. 2 and FIG. 3, FIG. 10 is a schematic structural diagram of the camera module shown in FIG. 1 from another angle, and FIG. 11 is a cross-sectional view of the camera module shown in FIG. 10 taken along AA direction. The camera module 10 according to the embodiments of the disclosure may further include a focus assembly 600. The focus assembly 600 may be directly or indirectly connected with the lens 300, and may be configured to drive the lens 300 to move. For example, the focus assembly 600 may drive the lens 300 to move along the optical axis of the lens 300.

The focus assembly 600 may be disposed on the image stabilization assembly 100, for example, it may be disposed on the image stabilization housing 160 of the image stabilization assembly 100. The focus assembly 600 may be arranged opposite to the image stabilization assembly 100 in the direction of optical axis of the lens 300. The focus assembly 600 and the image stabilization assembly 100 may be stacked along the first direction H1. In some embodiments, a mechanical position-limiting bracket 410 may be further provided between the docking assembly 600 and the image stabilization assembly 100.

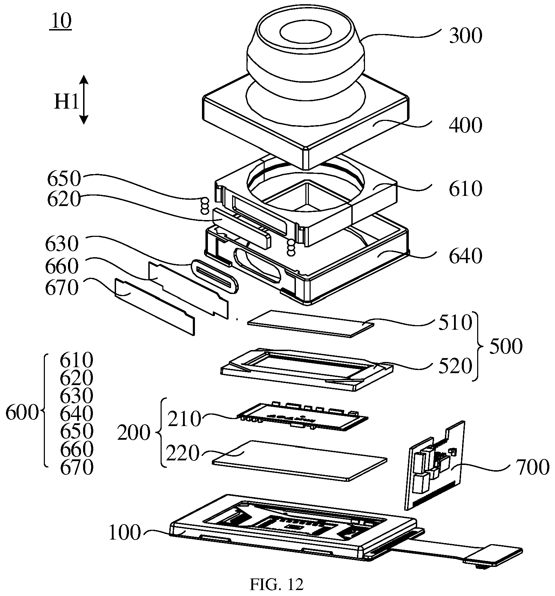

The focus assembly 600 may include a module shell and a focus driving mechanism. The module shell may serve as a mounting housing for the focus assembly 600. The focus driving mechanism may be disposed in the module shell. The focus driving mechanism may drive the lens 300 to move to achieve a focus function. In some embodiments, referring to FIG. 12, FIG. 12 is another schematic explosion structural diagram of the camera module according to the embodiments of the disclosure. The focus assembly 600 may include a carrier member 610, a magnetic member 620, and a conductive member 630.

The carrier member 610 may carry the lens 300, and the carrier member 610 may be but not limited to be a bearer for the lens 300. The magnetic member 620 may generate a magnetic field, and the carrier member 610 may be located in the magnetic field. The conductive member 630 may be arranged opposite to the magnetic member 620 along the direction perpendicular to the optical axis of the lens 300. The conductive member 630 may generate a force under the action of the magnetic member 620, and the force can drive the carrier member 610 to move up and down along the direction of the optical axis of the lens 300.

It can be understood that, the magnetic member 620 may be, but not limited to, a magnetic element that can generate a magnetic field, such as a permanent magnet, or an electromagnet. The carrier member 610 may be provided with an accommodating groove, and the magnetic member 620 may be located in the accommodating groove. The magnetic member 620 may include one or more sub-magnetic members. For example, the magnetic member 620 may include four sub-magnetic elements, and the four sub-magnetic elements may be located around the carrier member 610 at evenly spaced positions around the direction of optical axis of the lens 300. Accordingly, the conductive member 630 may also include multiple sub-conductive members, such that each of the sub-conductive members may be disposed opposite to a corresponding one of the sub-magnetic elements. In the embodiments of the disclosure, the specific structures of the magnetic member 620 and the carrier member 610 are not limited.

It can be understood that the conductive member 630 may be, but not limited to, a coil structure. An external power supply (e.g., the power supply of the electronic device, or the driving adapter plate 700) may supply power to the coil, such that the conductive member 630 may generate, under the action of the magnetic member 620, a force driving the carrier member 610 to move up and down along the first direction H1.

In some implementations, the focus assembly 600 may further include a bracket 640. The bracket 640 may be fixedly connected with the module housing 400 of the camera module 10 without moving with the magnetic member 620. The conductive member 630 may also be disposed on the bracket 640. For example, the bracket 640 is provided with a groove, and the conductive member 630 may be disposed in the groove. The module housing 400 may cover structures such as the carrier member 610 and the bracket 640, that is, structures such as the carrier member 610 and the bracket 640 are disposed in the module housing 400. In some other embodiments, the module housing 400 may further covers the image sensor, that is, the image sensor is also disposed in the module housing 400.

In some implementations, the bracket 640 may be further provided with a position-limiting groove extending in the first direction H1, and the carrier member 610 may be further provided with a ball structure 650 which may be accommodated in the position-limiting groove. When the conductive member 630 generates a force under the action of the magnetic member 620, the force may cause the carrier member 610 to move up and down along the first direction H1 relative to the bracket 640 under a rolling action of the ball structure 650.

In some implementations, the focus assembly 600 may further include a flexible circuit board 660. The flexible circuit board 660 may be disposed in the groove of the bracket 640, so as to be electrically connected with the conductive member 630. The flexible circuit board 660 may supply power and provide a control current to the conductive member 630. It can be understood that, the external power supply may also be electrically connected with the flexible circuit board 660, such that the external power supply is enabled to supply power to the conductive member 630 through the flexible circuit board 660.

In some implementations, the focus assembly 600 may further include a magnetic conductive sheet 670. The magnetic conductive sheet 670 is disposed in the groove of the bracket 640, and is configured to provide an adsorption force for the conductive member 630, such that the conductive member 630 is enabled to be fixed on the bracket 640.

In some implementations, the camera module 10 or the electronic device may further include a second control chip. The second control chip may be electrically connected to the focus assembly 600. The second control chip may monitor motion parameters of the lens 300, control the motion of the lens 300 and the carrier member 610 in real-time based on the monitored motion parameters and the shaking parameters of the camera module 10, such that the image stabilization compensation for the lens 300 is enabled to be more accurate, and the closed-loop control of the camera module 10 is realized.

The focus assembly 600 according to the embodiments of the disclosure can enable the carrier member 610 and the lens 300 to move up and down along the vertical direction through the cooperation of the magnetic member 620 and the conductive member 630. The focus assembly 600 has a simple structure and occupies a small space, which enables the miniaturized design of the camera module 10.

In some embodiments, a focus assembly in an open-loop mode may be selected as needed in conjunction with a closed-loop control chip, the focus speed may be slightly sacrificed while maintaining the control stability of the focus assembly. The image stabilization assembly is used to enable the anti-shake of the image sensor so as to achieve a better shooting effect, reduce the cost, and decrease the size of the camera module.

It is understandable that, in some other embodiments, the camera module 10 may not be provided with the focus assembly 600, and the camera module 10 has a fixed focal length, which can simplify the structure of the camera module. For example, the camera module is an auxiliary camera module.

It should be noted that the structure of the camera module 10 in the embodiments of the disclosure is not limited to the description of the embodiments above. For example, in addition to the image stabilization assembly 100, the image sensor assembly 200, the lens 300, and the focus assembly 600, the camera module 10 may further include, but is not limited to, a micro-gimbal assembly, and the like. In the embodiments of the disclosure, the specific structure of the camera module 10 is not limited.

In some implementations, the camera module may further include a lens image stabilization assembly. The lens image stabilization assembly is connected with the lens, and is configured to adjust the movement of the lens to achieve image stabilization of the lens. The lens image stabilization assembly may adopt a structure similar to the structure of the magnetic member, the coil structure and the ball structure in the above embodiments. For example, multiple pairs of magnetic members and coil structures, as well as multiple groups of ball structures are provided, and the image stabilization of the lens is realized by driving the movements of the lens through the magnetic members and coil structures. For example, the lens may be driven to rotate around the axis of the lens, and may be flipped in the plane perpendicular to the axis of the lens. The movement of the lens may be changed and correct an optical path when the camera module is shaken, thereby achieving an image stabilization compensation.

It is understandable that the image stabilization assembly that drives the camera module to move and the lens image stabilization assembly that drives the lens perform image stabilization processing on the camera module and the lens respectively, thereby realizing five-axis image stabilization of the camera module, which specifically includes image stabilization compensation in directions of five axes: Pitch (Rx), Yaw (Ry), Roll (Rz), Left/Right (X), and Up/Down (Y). Image stabilization on the Rx, Ry, and Rz axes may be assisted with a gyroscope sensor, and image compensation on the X and Y axes may be assisted with an acceleration sensor. Exemplarily, four-axis image stabilization may be achieved by using translations in the X and Y axis directions to compensate for a translations on the X and Y axes or a flip around the Rx and Ry axes. The image stabilization assembly may realize X-axis and Y-axis translations and rotation in the XY plane of the image sensor through a tensile force of four deformable members (SMA metal wires), thereby compensating for the translations on the X and Y axes or the flip around the Rx and Ry axes, and the image stabilization on the Rz axis.

The lens and the lens image stabilization assembly may be fixed by glue dispensing and baking, screwing or clamping, etc.

It is understandable that, in some embodiments, the camera module may not be provided with the lens image stabilization assembly, and the image stabilization processing of the camera module is achieved through the image stabilization assembly. In this way, the size of the camera module can be very small, and the camera module is used in some situation that have strict requirements on the size of the camera module.

In some implementations, the camera module may be an ordinary camera module or a periscope camera module. When the camera module is the periscope camera module, the camera module may further include a module housing and a prism assembly, and the lens is installed in the module housing. The prism assembly is installed in the module housing, the prism assembly is arranged on a side of the lens away from the image sensor, and the prism assembly is fixedly connected with the module housing. In the related art, most of the periscope module relies on controlling the movement of a prism to achieve image stabilization, as such a prism image stabilization module would have a large size and a complicated structure. The embodiments adopt in-body image stabilization (i.e., image stabilization of the image sensor), and the image stabilization of the camera module is achieved through image stabilization of the image sensor, so that the prism may be fixedly disposed in the module housing, and the size of the prism would be reduced. In this way, there is no need to set a complex prism image stabilization structure, which can reduce costs and optimize the size of the camera module.

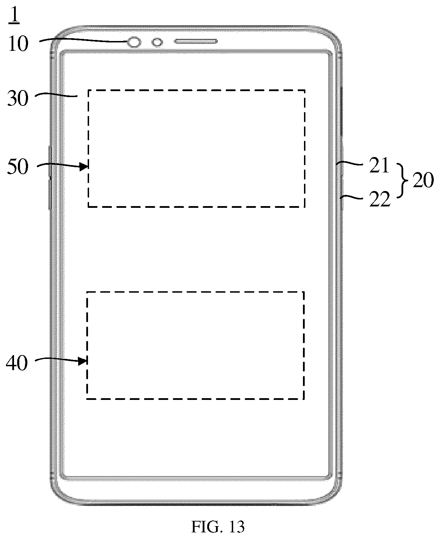

The embodiments of the disclosure further provide an electronic device, referring to FIG. 13, FIG. 13 is a schematic structural diagram of the electronic device according to the embodiments of the disclosure. The electronic device 1 includes a housing 20 and a camera module 10, the camera module 10 is installed in the housing 20, and the camera module 10 is the camera module 10 according to any of the above-mentioned embodiments, which will not be described here in detail.

The electronic device further includes a pop-up driving mechanism, the pop-up driving mechanism is connected with the camera module and is configured to drive the camera module to move into the housing or move outside the housing. The camera module may be a pop-up camera module. When the electronic device needs to use the camera module, the pop-up driving mechanism moves the camera module from the inside of the electronic device to the outside of the electronic device, and then the camera module can be used normally. When the electronic device uses an external camera module, the pop-up drive mechanism moves the camera module from the outside of the electronic device to the inside of the electronic device, and the camera module enters a standby state or a power-off state.

In order to better understand the electronic device of the embodiments, the following is an example taking the electronic device 1 as a mobile phone. As illustrated in FIG. 13, in addition to the camera module 10 according to the embodiments above, the electronic device 1 may further include a display screen 30, a battery 40, and a main board 50. It is notable that the rear camera of the electronic device may also be the camera module according to the above embodiments. Certainly, the electronic device may be only provided with a front camera or a rear camera, in which the front camera and the rear camera may also be the camera module according to the above embodiments.

The housing 20 may include a middle frame 21 and a rear housing 22. The display screen 30 may cover a side of the middle frame 21, and the rear housing 22 may be disposed on another side of the middle frame 21. For example, the display screen 30 and the rear housing 22 may covers two opposite sides of the middle frame 21 by bonding, welding, snap-fitting, etc. The camera module 10 may be disposed between the display screen 30 and the rear housing 22, and can receive light from the external environment.

The rear housing 22 may be a battery cover of the electronic device 1. The rear housing 22 may be made of glass, metal, hard plastic, etc., or be made of other electrochromic materials. The rear housing 22 has a certain structural strength, and is mainly configured to protect the electronic device 1. The middle frame 21 may also be made of glass, metal, hard plastic, etc. The middle frame 21 also has a certain structural strength, and is mainly configured to support and fix the camera module 10 and other functional assemblies installed between the middle frame 21 and the rear housing 22, such as the battery 40, the main board 50, and an antenna of the electronic device 1. Since the middle frame 21 and the rear housing 22 are generally directly exposed to the external environment, the materials of the middle frame 21 and the rear housing 22 may have certain properties such as wear-resistance, corrosion-resistance, and scratch-resistance. Alternatively, outer surfaces of the middle frame 21 and the rear housing 22 (i.e., an outer surface of the electronic device 1) are coated with a layer of functional material of wear-resistance, corrosion-resistance, and scratch-resistance.

The display screen 30 may include a display module and a circuit configured to respond to a touch operation on the display module. The display screen 30 may use an organic light-emitting diode (OLED) screen, or a liquid crystal display (LCD) screen for image display. In addition, the display screen 30 may be a flat screen, a hyperbolic screen, or a quad-curved screen, which is not limited to the embodiments.

It is notable that, for mobile phones, the above-mentioned flat screen means that the display screen 30 is in a flat shape on a whole. The above-mentioned hyperbolic screen means that left and right edge areas of the display screen 30 are in curved shapes, and other areas are still in a flat shape, which can not only reduce a black border of the display 30 and increase a visible area of the display 30, but also can increase aesthetic sense of appearance and grip feeling of the electronic device 1. The above-mentioned quad-curved screen means that upper, lower, left and right edge areas of the display screen 30 are in a curved shape, and other areas are still in a flat shape, which not only can further reduce the black border of the display screen 30 and increase the visible area of the display screen 30, but also can further increase the aesthetic sense of appearance and grip feeling of the electronic device 1.

The main board 50 may be disposed in the housing 20, and the main board 50 may be a main control circuit board of the electronic device 1. The main board 50 may be integrated with a processor, and may also be integrated with one or more functional components such as a headphone interface, an acceleration sensor, a gyroscope, and a motor. The processor on the main board 50 may control the display screen 30 and the camera module 10.

The battery 40 may be disposed in the housing 20. The battery 40 may be electrically connected with the main board 50 to supply power to the electronic device 1. The main board 50 may be provided with a power management circuit for the battery 40. The power management circuit for the battery 40 is configured to distribute a voltage provided by the battery 40 to each electronic devices in the electronic device 1.

It can be understood that the above is only an exemplary example of the electronic device 1. The electronic device 1 in the embodiments of the disclosure may also include components such as a sensor, an acoustic-electric conversion device, an antenna module, which can refer to the description in related technologies and are not repeated herein.

It can be understood that the electronic device provided in the embodiments of the disclosure may be a mobile terminal device such as a mobile phone, or a tablet computer, and may also be other devices with a camera module, such as a gaming device, an augmented reality (AR) device, a virtual reality (VR) device, a vehicle-mounted computer, a laptop, a data storage device, an audio playback device, a video playback device, a wearable device, a monitoring device, in which the wearable device may be a smart watch, smart glasses, etc.

In the description of the disclosure, the terms "first" and "second" are merely intended for a purposes of description, and shall not be understood as indicating or implying relative significance or implicitly indicating the quantity of indicated technical features. Therefore, features defined with "first" or "second" may explicitly or implicitly include one or more of the features. In the description of the disclosure, the term "plurality" and "multiple" means two or more than two, unless otherwise specifically defined.

The image stabilization assembly, the camera module, and the electronic device provided by the embodiments of the disclosure have been introduced in detail above. In the descriptions, examples are used to illustrate the principles and implementations of the disclosure, and the descriptions of the embodiments above are merely used to help understand the method and the core idea of the disclosure. For those skilled in the art, the implementations and the application scope may be changed based on the idea of the disclosure. In summary, the content of the specification should not be construed as a limitation on the disclosure.

## Claims

1. An image stabilization assembly, comprising:
a base plate;
a bearing plate, comprising a fixed member and a movable member, wherein the fixed member and the movable member are spaced apart from each other, the fixed member is installed on the base plate, and the movable member is configured to bear an image sensor of a camera module;
an elastic member, disposed between the fixed member and the movable member;
an elevating bracket, disposed between the base plate and the movable member; and
a driving mechanism, comprising a moving member and a plurality of deformable members, wherein the moving member is connected with the movable member, an end of each of the plurality of deformable members is connected with the fixed member, another end of the each of the plurality of deformable members is connected with the moving member, and the plurality of deformable members are configured to be deformed in an energized state to drive the moving member, the movable member and the image sensor to move.

2. The image stabilization assembly as claimed in claim 1, wherein the elevating bracket comprises an elevating baseplate and a plurality of protrusions, the plurality of protrusions are in number of at least three, the plurality of protrusions are all disposed on a side of the elevating baseplate facing the movable member and are spaced apart from each another, surfaces of all the protrusions facing the movable member are in a same plane, and at least three of the plurality of protrusions abut against the movable member.

3. The image stabilization assembly as claimed in claim 2, wherein the moving member is disposed on a side of the movable member away from the base plate.

4. The image stabilization assembly as claimed in claim 3, wherein the driving mechanism further comprises:
a plurality of movable ends, each of the plurality of movable ends being fixedly disposed on the moving member; and
a plurality of fixed ends, each of the plurality of fixed ends being fixedly disposed on a side of the fixed member away from the base plate;
wherein an end of each of the plurality of deformable members is connected with one of the fixed ends, and another end of each of the plurality of deformable members is connected with one of the movable ends.

5. The image stabilization assembly as claimed in claim 4, wherein the driving mechanism further comprises:
an elevating member, disposed between the movable member and the moving member.

6. The image stabilization assembly as claimed in claim 1, wherein an end of the elastic member is configured to be electrically connected with the image sensor, and another end of the elastic member is configured to be electrically connected with an external circuit, so as to electrically connect the image sensor with the external circuit.

7. The image stabilization assembly as claimed in claim 6, wherein the elastic member comprises a plurality of trace suspension assemblies, and the plurality of trace suspension assemblies are disposed around the moving member.

8. The image stabilization assembly as claimed in claim 7, wherein each of the plurality of trace suspension assemblies comprises a plurality of suspension traces, and the plurality of suspension traces are disposed side by side and spaced apart from one another.

9. The image stabilization assembly as claimed in claim 1, wherein the movable member comprises a metal layer and an insulating layer which are disposed in a laminated manner, a side of the insulating layer facing away from the base plate is configured to bear the image sensor of the camera module, and the metal layer is disposed on a side of the insulating layer facing the base plate.

10. A camera module, comprising:
a lens, configured to collect external light;
an image sensor, disposed opposite to the lens in a direction of optical axis of the lens; and
an image stabilization assembly, comprising:
a base plate;
a bearing plate, comprising a fixed member and a movable member, wherein the fixed member and the movable member are spaced apart from each other, the fixed member is installed on the base plate, and the movable member is configured to bear the image sensor;
an elastic member, disposed between the fixed member and the movable member;
an elevating bracket, disposed between the base plate and the movable member; and
a driving mechanism, comprising a moving member and a plurality of deformable members, wherein the moving member is connected with the movable member, an end of each of the plurality of deformable members is connected with the fixed member, another end of the each of the plurality of deformable members is connected with the moving member, and the plurality of deformable members are configured to be deformed in an energized state to drive the moving member, the movable member and the image sensor to move.

11. The camera module as claimed in claim 10, wherein the elevating bracket comprises an elevating baseplate and a plurality of protrusions, the plurality of protrusions are in number of at least three, the plurality of protrusions are all disposed on a side of the elevating baseplate facing the movable member and are spaced apart from each another, surfaces of all the protrusions facing the movable member are in a same plane, and at least three of the plurality of protrusions abut against the movable member.

12. The camera module as claimed in claim 10, further comprising:
a driving adapter plate vertically disposed on the base plate, wherein the driving adapter plate is electrically connected with the deformable member, and is configured to control deformation of the deformable members.

13. The camera module as claimed in claim 12, wherein the image stabilization assembly further comprises an image stabilization housing, the image stabilization housing covers the driving mechanism, the image stabilization housing is provided with an opening, the opening directly faces the lens, and the driving adapter plate is attached to the image stabilization housing.

14. The camera module as claimed in claim 12, further comprising: a module housing, wherein the lens is installed within the module housing, the module housing is installed on the base plate, and the driving adapter plate is attached to the module housing.

15. The camera module as claimed in claim 10, further comprising: a driving adapter plate, the driving adapter plate comprising:
a detection unit, wherein the detection unit is electrically connected with the deformable members and is configured to obtain a resistance value of each of the deformable members; and
a control chip, wherein the control chip is electrically connected with the detection unit and is configured to control a current passing through the deformable member according to the resistance value.

16. The camera module as claimed in claim 10, further comprising:
a focus assembly, wherein the focus assembly is connected with the lens and is configured to drive the lens to move.

17. The camera module as claimed in claim 10, further comprising:
a lens image stabilization assembly, wherein the lens image stabilization assembly is connected with the lens, and is configured to adjust movement of the lens for image stabilization of the lens.

18. The camera module as claimed in claim 10, further comprising:
a module housing, wherein the lens is installed within the module housing; and
a prism assembly installed within the module housing, wherein the prism assembly is disposed on a side of the lens away from the image sensor, and the prism assembly is fixedly connected with the module housing.

19. An electronic device, comprising:
a housing; and
a camera module, installed in the housing, wherein the camera module comprises:
a lens, configured to collect external light;
an image sensor, disposed opposite to the lens in a direction of optical axis of the lens; and
an image stabilization assembly, comprising:
a base plate;
a bearing plate, comprising a fixed member and a movable member, wherein the fixed member and the movable member are spaced apart from each other, the fixed member is installed on the base plate, and the movable member is configured to bear the image sensor;
an elastic member, disposed between the fixed member and the movable member;
an elevating bracket, disposed between the base plate and the movable member; and
a driving mechanism, comprising a moving member and a plurality of deformable members, wherein the moving member is connected with the movable member, an end of each of the plurality of deformable members is connected with the fixed member, another end of each of the plurality of deformable members is connected with the moving member, and the plurality of deformable members are configured to be deformed in an energized state to drive the moving member, the movable member and the image sensor to move.

20. The electronic device as claimed in claim 19, further comprising:
a pop-up driving mechanism, wherein the pop-up driving mechanism is connected with the camera module, and is configured to drive the camera module to move into the housing or outside the housing.
